# NEUE EUROPÄISCHE PATENTSCHRIFT

(11) **EP 1 113 913 B2**
(45) Veröffentlichungstag und Bekanntmachung des Hinweises auf die Entscheidung über den Einspruch: **26.11.2008**
(45) Hinweis auf die Patenterteilung: 14.09.2005
(21) Anmeldenummer: 00949332.1
(22) Anmeldetag: 13.07.2000
(51) Int. Cl.: B29B 9/06, B29B 9/12, B29B 13/04, B29C 47/88

(54) **VERFAHREN UND VORRICHTUNG ZUR ZULEITUNG UND BEHANDLUNG VON KUNSTSTOFFSTRÄNGEN**
METHOD AND DEVICE FOR FEEDING AND TREATING PLASTIC STRANDS
PROCEDE ET DISPOSITIF PERMETTANT D'AMENER ET DE TRAITER DES BOUDINS EN PLASTIQUE

(30) Priorität: 16.07.1999 DE 19933476
(43) Veröffentlichungstag der Anmeldung: 11.07.2001
(73) Patentinhaber: Rieter Automatik GmbH, 63762 Grossostheim (DE)
(72) Erfinder: GLÖCKNER, Frank, D-63739 Aschaffenburg (DE); STEINBACHER, Werner, D-63867 Johannesberg (DE)
(74) Vertreter: Bardehle, Heinz
(86) Internationale Anmeldenummer: PCT/EP2000/006691
(87) Internationale Veröffentlichungsnummer: WO 2001/005566

(56) Entgegenhaltungen:
- DE-A- 2 559 541
- DE-A- 3 205 052
- DE-A- 19 739 747
- US-A- 4 699 745
- US-A- 5 206 339
- US-A- 5 310 515
- US-A- 5 441 394
- US-A- 5 573 790
- US-A- 5 595 696
- Einführung in die Kunststoffverarbeitung, Georg Menges, Karl Hanser Verlag München, Wien, 2. Auflage, S. 28 bis 35, (1979)
- Kunststoff Taschenbuch, Saechtling, Carl Hanser Verlag München, Wien, 27. Auflage, S. 94 bis 97, S. 122, S. 644 bis 651 (1998)
- Granulieren von Thermoplasten : Systeme im Vergleich/Jahrestagung Aufbereitungstechnik, Baden-Baden, 24. und 25. November 1999 - Düsseldorf, VDI-Verlag, S. 403 bis 439 (1999)
- Granulierung von thermoplastischen Grundstoffen, VDI-Verlag GmbH Düsseldof, S. 257 bis 272 (D4.1), S. 283 bis 292 (D4.2), S. 293 bis 301 (D4.3), (1974)

## Beschreibung

Die Erfindung betrifft ein Verfahren und eine Vorrichtung zur Zuleitung und Behandlung von schmelzflüssig aus Düsen austretenden Kunststoffsträngen mit einer Kühlstrecke für ein Granulieren der Kunststoffstränge gemäß den Oberbegriffen der Ansprüche 1 und 11.

Ein derartiges Verfahren ist aus der Druckschrift DE 43 14 162 bekannt. Bei diesem aus dem Stand der Technik bekannten Verfahren wird ein Granulieren der Kunststoffstränge erst vorgenommen, nachdem die Kunststoffstränge in kaltem Wasser abgeschreckt und danach entwässert, getrocknet und kristallisiert sind, wozu eine einen Kühlflüssigkeitsstrom erzeugende Einrichtung in einer Ablaufrinne zum Abschrecken der aus einer Düse austretenden Kunststoffstränge integriert wird. Nach einer derartigen Abschreckungsstrecke folgt dann eine Entwässerungsstrecke zum freien Ablauf der Kühlflüssigkeit aus der Ablaufrinne und anschließend eine Trocknungsstrecke, in der Blasdüsen die anhaftene Restkühlflüssigkeit von den Kunststoffsträngen abblasen, wobei die getrockneten Kunststoffstränge in einer langgestreckten sich anschließenden Trocknungsstrecke durchkristallisieren, bevor sie anschließend mittels eines Granulators granuliert werden. Zur Durchführung des Verfahrens nach dem Stand der Technik ist eine langgestreckte, mehrere Meter lange Laufrinne erforderlich, um die unterschiedlichen Verweilzeiten in der Abschreckungsstrecke, der Entwässerungsstrecke und der Trocknungsstrecke zur Kristallisation der Kunststoffstränge zu gewährleisten.

Eine derartige bekannte Vorrichtung hat den Nachteil, daß zur Durchführung des Verfahrens ein hoher apparativer Aufwand getrieben werden muß, der insbesondere in einer verhältnismäßig langgestreckten Ablaufrinne zu sehen ist, in der die unterschiedlichen Phasen vom Abschrecken über das Trocknen bis zur Kristallisation der getrockneten Kunststoffstränge erfolgen müssen, bevor granuliert werden kann. Andere bekannte Verfahren granulieren die Stränge in nichtkristallinem, amorphen Zustand, der dadurch erreicht wird, daß zunächst die Kunststoffstränge in einem Kühlmittel unter die Glasumwandlungstemperatur heruntergekühlt werden, um sie nach Erreichen des amorphen Zustands unter Einfluß des Kühlmittels und im Beisein des Kühlmittels zu Granulat zu verarbeiten. Für dieses "Unterwassergranulierverfahren" ist die Kühlstrecke gegenüber einer Abschreckstrecke in der Ablaufrinne wesentlich verlängert, um den Kunststoffstrang mit einem Kühlmedium, das üblicherweise kaltes Wasser ist, zur Beibehaltung des amorphen Zustandes, wie er auch in der Kunststoffschmelze vorhanden ist, zu granulieren.

Zur Durchführung beider aus dem Stand der Technik bekannter Verfahren sind aufwendige, langgestreckte Ablaufrinnen erforderlich, die zwar eine exakte und reproduzierbare Herstellung des Granulats in kristalliner oder amorpher Form gewährleisten, jedoch aufgrund ihrer Länge und ihrer aufeinander abzustimmenden Komponenten einen großen Raumbedarf in Anspruch nehmen.

Aufgabe der Erfindung ist es, ein Verfahren zur Zuleitung und Behandlung von schmelzflüssig aus Düsen austretenden Kunststoffsträngen mit einer Kühlstrecke für ein Granulieren der Kunststoffstrecke anzugeben, das mit wesentlichen kürzeren Stranglängen vor einer Granulierung auskommt und damit für Vorrichtungen geeignet ist, die einen geringen Raumbedarf benötigen.

Diese Aufgabe wird mit dem Gegenstand der Ansprüche 1 und 11 gelöst. Merkmale bevorzugter Ausführungsformen der Erfindung werden in den zugehörigen Unteransprüchen offenbart.

Zur Verkürzung der Verweilzeit in einer Ablaufrinne werden die Kunststoffstränge unmittelbar nach dem Austritt aus den Düsen durch ein flüssiges temperiertes Medium direkt teilkristallisiert, wozu das flüssige temperierte Medium auf einer Temperatur über der Glasumwandlungstemperatur der Kunststoffstränge gehalten wird.

Dieses Verfahren hat den Vorteil, daß die schmelzflüssig aus den Düsen austretenden Kunststoffstränge nicht mit kaltem Wasser abgeschreckt werden, um sie anschließend zu trocknen, zu kristallisieren und zu granulieren, sondern daß die Kunststoffstränge in ein relativ heißes wohltemperiertes flüssiges Medium eintreten, das sicherstellt, daß im gesamten Verlauf einer Ablaufrinne für die Kunststoffstränge die Glasumwandlungstemperatur der Kunststoffstränge nicht unterschritten wird. Dadurch tritt vorteilhaft eine Teilkristallisierung zumindest im Mantelbereich der Kunststoffstränge auf, so daß die Kunststoffstränge eine ausreichende Festigkeit erreichen, um anschließend in der Granulierungsanlage ohne vorherige Trocknung der Kunststoffstränge zu Pellets zerteilt zu werden. Unmittelbar nach der Granulierungseinrichtung liegt ein Gemisch aus Granulat und flüssigem Kühlmedium vor, von dem das Granulat mit bekannten Mitteln getrennt werden kann. Da die Teilkristallisation zumindest des Mantels der Kunststoffstränge unmittelbar nach dem Austritt des schmelzflüssigen Kunststoffs aus den Düsen einsetzt, kann nach Durchlaufen der Kunststoffstränge einer relativ kurzen Temperierungsstrecke die Granulierung der Kunststoffstränge erfolgen.

Vorzugsweise wird die Länge der Strecke, in der die Kunststoffstränge unter temperiertem flüssigen Medium gehalten werden, für Verweilzeiten größer 0,5 Sekunden und kleiner 5 Sekunden ausgelegt. Dazu wird vorzugsweise die Temperatur des flüssigen Mediums geregelt, so daß eine konstante Temperatur oberhalb der Glasumwandlungstemperatur im flüssigen Medium gehalten wird. Dieses Halten der Temperatur erfolgt vorzugsweist in einem Kreislauf für das flüssige Medium, bei dem entsprechend geregelte Heizelemente in dem Heizkreislauf eingesetzt werden. Damit wird die Temperatur des flüssigen Mediums derart geregelt, daß die Mediumtemperatur unterhalb von 150 % der Glasumwandlungstemperatur in °C und oberhalb von 100 % der Glasumwandlungstemperatur in °C für den Kunststoffstrang liegt. In einer bevorzugten Durchführung des Verfahrens wird als flüssiges Medium Heißwasser eingesetzt. Dieses hat den Vorteil gegenüber Verfahren, die mit Kaltwasserabschreckung oder Kaltwasserabkühlung arbeiten, daß in dem Heißwasserkreislauf keine Probleme mit Algenbildung auftreten können, da diese Algen im Heißwasser nicht überleben. Darüber hinaus hat Wasser gegenüber anderen Flüssigkeiten den Vorteil, daß es relativ preiswert als Reinstwasser darstellbar ist und somit die Kosten des gesamten Verfahrens niedrig gehalten werden können.

Bei einer weiteren bevorzugten Durchführung des Verfahrens weist der Kunststoff eine Glasumwandlungstemperatur unter 100 °C auf. Kunststoffe mit einer derart niedrigen Glasumwandlungstemperatur haben den Vorteil, daß als temperiertes flüssiges Medium Heißwasser verwandt werden kann. Bei Temperaturen über 100 °C können vorzugsweise Glyzerinwassergemische oder Öle als temperierte flüssige Medien eingesetzt werden.

In einer weiteren bevorzugten Ausführungsform enthält die Kunststoffschmelze Polyamide. Bei derartigen Polyamiden, die eine NH-Gruppe als Aminogruppe aufweisen, gibt es zwei Kunststoffe mit völlig unterschiedlichen Glasumwandlungstemperaturen. Einer dieser Kunststoffe wird durch Addition von Lactam zu Polyamid 6 polymerisiert und weist eine Glasumwandlungstemperatur zwischen 40 und 60 °C auf. Für einen derartigen Kunststoff ist Heißwasser als temperiertes flüssiges Medium von Vorteil, da die Lactamablagerungen gegenüber Kaltwasserkreisläufen aufgrund höherer Löslichkeit von Lactam in Heißwasser geringer sind und dadurch eine geringere Verschmutzungsgefahr besteht. Darüber hinaus liefert das vorliegende Verfahren ein wesentlich heißeres teilkristallisiertes Granulat gegenüber dem bisher hergestellten amorphen Granulat unter Kaltwasser. Dieses heißere Granulat erfordert bei der Weiterverarbeitung in der Extraktion geringere Aufheizzeiten, und damit vermindert es den Energieverbrauch des Gesamtverfahrens.

Eine zweite Gruppe von Polyamiden entsteht durch Polykondensation von zwei unterschiedlichen Monomeren, wie dem Diamin und der Dicarbonsäure, die unter Kondensationsbedingungen ein Polyamid 6.6 bilden, das eine um etwa 10 °C erhöhte Glasumwandlungstemperatur aufweist, die zwischen 50 °C und 80 °C liegt.

Bei einer weiteren bevorzugten Durchführung des Verfahrens wird ein Kunststoff verarbeitet, bei dem die Kunststoffschmelze Polyolefine enthält. Derartige Kunststoffschmelzen lassen sich ebenfalls durch Austreten aus Düsen zu Kunststoffsträngen verarbeiten und können somit unmittelbar nach dem Austritt aus den Düsen erfindungsgemäß einem temperierten flüssigen Medium in einer Kristallisationsstrecke teilkristallisiert werden.

In einer weiteren bevorzugten Durchführung des Verfahrens durchlaufen die Kunststoffstränge eine im wesentlichen vertikale Kristallisationsstrecke. Eine derartige im wesentlichen vertikale Kristallisationsstrecke hat den Vorteil, daß keine besonderen Maßnahmen zur Führung der Kristallisationsstränge in Richtung auf den Granulator ergriffen werden müssen, zumal, wenn die Führung der Kunststoffstränge in der Kristallisationsstrecke durch freien Fall erfolgt.

Eine Vorrichtung zur Zuleitung und Behandlung von Kunststoffsträngen, die schmelzflüssig aus Düsen austreten, weist ein Kristallisationsstreckenteil auf, das unmittelbar nach den Düsen angeordnet ist, wobei vorzugsweise für die Kristallisationsstrecke Heiz- und Kühleinrichtungen vorgesehen sind und eine Temperaturregelvorrichtung, mit der die Temperatur eines temperierten flüssigen Mediums auf einer Temperatur oberhalb der Glasumwandlungstemperatur des Kunststoffs regelbar ist, bereitgestellt ist. Das Kristallisationsstreckenteil ist dazu vorzugsweise im wesentlichen senkrecht angeordnet.

Vorzugsweise wird das temperierte flüssige Medium auf eine konstante Vorlauftemperaur mittels Durchlaufthermostaten als Heiz- und Kühleinrichtung geregelt, welche das temperierte flüssige Medium auf einer konstanten Vorlauftemperatur oberhalb der Glasumwandlungstemperatur und bis auf 150 % der Glasumwandlungstemperatur halten.

In einer bevorzugten Ausführungsform der Vorrichtung ist die Granuliervorrichtung 7 unmittelbar nach dem Kristallisationsstreckenteil 35 der Kristallisationsstrecke 5 stromabwärts in Richtung des Materialflusses angeordnet. Dazu kann das Kristallisationsstreckenteil integraler Bestandteil der Granuliereinrichtung sein. Um eine derart kompakte Einrichtung aus Kristallisationsstrecke und Granuliereinrichtung anfahren zu können, ist eine derartige Einrichtung so auseinander fahrbar, daß zunächst zur Stabilisierung die aus den Düsen austretenden Kunststoffstränge im freien Fall nach unten fallen können. Nach Eingriff einer automatischen Strangtrennung werden dann die getrennten Einrichtungsteile zusammengefahren, so daß stabilisierte Kunststoffstränge unmittelbar im Bereich des Kristallisationsstreckenteils mindestens teilkristallisieren können und in der angeschlossenen Granuliereinrichtung zu einem Granulat-/ Mediumgemisch verarbeitet werden können.

Zur Temperierung der Unterseite der aus den Düsen austretenden Kunststoffstränge ist ein Zuleitungsrohr nach den Düsen angeordnet. Dieses Zuleitungsrohr führt in seinem Innenraum das temperierte flüssige Medium und auf seinem Außenmantel die Kunststoffstränge. Zur Versorgung des Kristallisationsstreckenteils mit temperiertem Medium weist das Zuleitungsrohr vorzugsweise einen Längsschlitz auf, der so positioniert ist, daß er die Unterseite der Kunststoffstränge mit temperiertem flüssigen Medium versorgt, indem er einen Film aus temperiertem flüssigen Medium auf dem Kristallisationsstreckenteil bildet. Die Oberseite der Kunststoffstränge wird vorzugsweise durch Sprühdüsen, die aus einem weiteren Zuleitungsrohr mit temperiertem flüssigen Medium versorgt werden, im Bereich der Kristallisationsstrecke temperiert.

In einer weiteren bevorzugten Ausführungsform der Vorrichtung kann das Zuleitungsrohr, das die Kunststoffstränge führt, anstelle eines Längsschlitzes an jeder Position zur Führung eines Kunststoffstranges eine Bohrung zur Temperierung der Unterseite des Kunststoffstranges mittels eines temperierten Mediums aufweisen.

Eine bevorzugte alternative Ausführungsform der Vorrichtung sieht vor, daß das Kristallisationsstreckenteil zwischen einer Ruheposition und einer Arbeitsposition schwenkbar ist, wobei die Ruheposition ein Austreten der Kunststoffschmelze aus den Düsen in vertikaler Richtung freigibt und die Arbeitsposition die Kunststoffstränge in teilkristallisierter Form einer Granuliereinrichtung zuführt. Diese Ausführungsform hat den Vorteil, daß trotz raumsparender Anordnung die Granuliereinrichtung als Einzelkomponente eine feste Position aufweisen kann und lediglich der Kristallisationsstreckenteil beweg- oder schwenkbar konstruiert ist. Der Übergang von dem Kristallisationsstreckenteil zur Granuliereinrichtung kann durch eine kurze Zuführungsrinne, die vorzugsweise aus der Granuliereinheit herausragt, gewährleistet werden.

Weitere Vorteile, Merkmale und Anwendungsmöglichkeiten der Erfindung werden nun anhand eines Ausführungsbeispiels unter Bezugnahme auf die beigefügten Zeichnungen näher erläutert. Es zeigen:
- Fig. 1: eine Prinzipskizze einer Vorrichtung zur Durchführung des Verfahrens gemäß einer Ausführungsform der vorliegenden Erfindung,
- Fig. 2: eine Prinzipskizze einer Vorrichtung einschließlich eines Kreislaufes für ein temperiertes flüssiges Medium gemäß einer weiteren Ausführungsform der vorliegenden Erfindung,
- Fig. 3A und 3B: Querschnittsansichten in Längsrichtung und senkrecht dazu eines Zuleitungsrohres zur Kristallisationsstrecke, das innen ein temperiertes und flüssiges Medium leitet und außen Kunststoffstränge führt, und
- Fig. 4A und 4B: Querschnittsansichten in Längsrichtung und senkrecht dazu eines Zuleitungsrohres zur Kristallisationsstrecke, das innen ein temperiertes flüssiges Medium leitet und außen Kunststoffstränge führt.

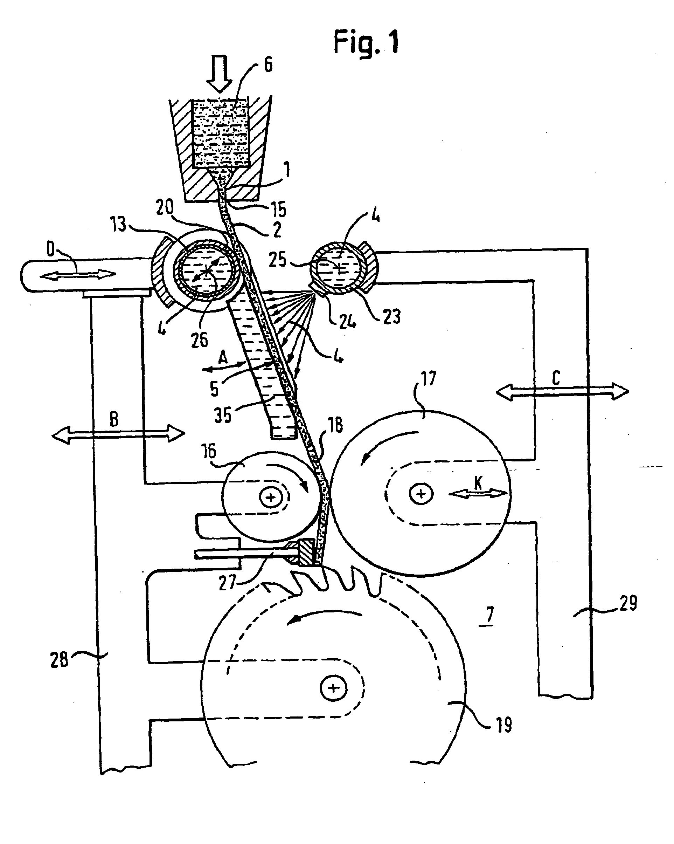

Figur 1 zeigt eine Prinzipskizze einer Vorrichtung zur Durchführung des Verfahrens zur Zuleitung und Behandlung von schmelzflüssig aus Düsen 1 austretenden Kunststoffsträngen 2 mit einer Kühlstrecke für ein Granulieren der Kunststoffstränge 2 mit einer Kristallisationsstrecke 5 für ein Granulieren der Kunststoffstränge 2 gemäß einer Ausführungsform der vorliegenden Erfindung. Die Kunststoffstränge 2 werden unmittelbar nach dem Austritt aus den Düsen 1 in einem temperierten flüssigen Medium 4 auf einer Kristallisationsstrecke 5 teilkristallisiert. Dazu wird das flüssige Medium 4 auf einer Temperatur über der Glasumwandlungstemperatur der Kunststoffstränge 2 gehalten und nicht unter die Glasumwandlungstemperatur abgeschreckt oder gar in einer langen Führungsrinne unter Kühlwasser unter die Glasumwandlungstemperatur abgekühlt und gehalten, wie es im Stand der Technik üblich ist, um die Kunststoffstränge 2 in einem amorphen Zustand einer Granuliereinrichtung zuzuführen. Da ein Teilkristallisieren durch ein temperiertes flüssiges Medium 4 unmittelbar nach dem Austritt aus den Düsen 1 bei dem erfindungsgemäßen Verfahren erreicht wird, ist die Kristallisationsstrecke äußerst kurz und damit der Abstand zwischen Granuliereinrichtung und Düsenaustritt 15 äußerst gering.

Bei einer bevorzugten Vorrichtung zur Durchführung des Verfahrens, wie sie in Figur 1 gezeigt wird, ist deshalb die Kristallisationsstrecke 5 integraler Bestandteil der sich unmittelbar anschließenden Granuliereinrichtung. Die Granuliereinrichtung übernimmt mit einer Antriebswalze 16 und einer Andruckwalze 17, die synchron zur Antriebswalze 16 angetrieben sein kann, die teilkristallisierten Kunststoffstränge 18 und führt sie dem Schneidrotor 19 zu, so daß in der Granuliereinrichtung 7 ein Gemisch aus temperiertem flüssigen Medium und Kunststoffgranulat gebildet wird und der Weiterverarbeitung zugeführt werden kann.

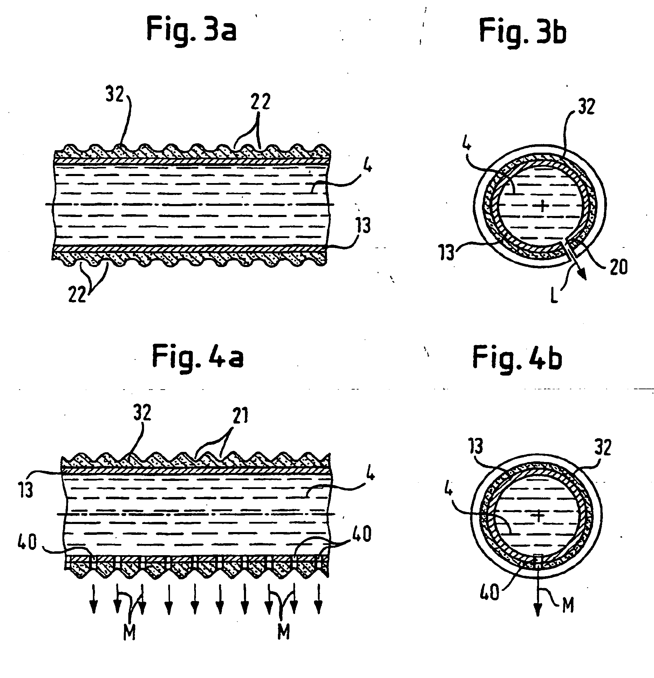

Zur Temperierung der zu kristallisierenden Kunststoffstränge mittels eines temperierten flüssigen Mediums 4 weist die Vorrichtung, wie sie Figur 1 zeigt, ein Zuleitungsrohr 13 auf, das im Detail mit den Figuren 3A, 3B oder 4A und 4B im folgenden näher erläutert wird.

Dieses Zuleitungsrohr 13 zur Kristallisationsstrecke 5 weist einen Längsschlitz 20 auf, womit ermöglicht wird, daß das temperierende flüssige Medium 4 im Bereich der Kristallisationsstrecke 5 einen temperierenden Flüssigkeitsfilm bildet. Der Längsschlitz 20 kann auch durch eine Bohrungsreihe ersetzt werden, so daß das temperierende flüssige Medium 4 direkt an den Positionen aus dem Zuleitungsrohr 13 austritt, in denen ein Kunststoffstrang 2 jeweils geführt wird. Zur Führung der Kunststoffstränge 2 weist das Zuleitungsrohr an seinem äußeren Umfang in Längsrichtung einen strukturierten Mantel auf, der Umfangsrinnen 22, wie sie in Figur 3A zu sehen sind, oder Umfangsnuten 21, wie sie in Figur 4A gezeigt werden, aufweist. Diese Umfangsnuten 21 oder Umfangsrinnen 22 auf dem Zuleitungsrohr 13 dienen der Führung der Kunststoffstränge in Richtung auf die Kristallisationsstrecke 5.

Während das Zuleitungsrohr 13 mit seinem Längsschlitz 20 oder seinen entsprechenden Bohrungen das temperierende flüssige Medium von der einen Seite der Kunststoffstränge, die im folgenden Unterseite genannt wird, liefert, wird die andere Seite der Kunststoffstränge, die im folgenden Oberseite genannt wird, in dieser Ausführungsform einer Vorrichtung zur Durchführung des erfindungsgemäßen Verfahrens mit temperiertem flüssigen Medium aus Sprühdüsen 24 temperiert. Die Sprühdüsen 24 werden über eine weitere Zuleitung 23 mit temperierendem flüssigen Medium 4 versorgt. Der Sprühwinkel der Sprühdüsen 24 kann durch Schwenken des Zuleitungsrohres 23 um seine Achse 25 eingestellt werden. Der Winkel, mit dem die Kunststoffstränge 2 über die Kristallisationsstrecke gleiten, kann durch Schwenken des Zuleitungsrohres 13 um seine Achse 26 eingestellt werden, da in dieser bevorzugten Vorrichtung ein Kristallisationsstreckenteil 35 und das Zuleitungsrohr 13 fest miteinander verbunden sind. In anderen Ausführungsformen kann die Einstellung des Neigungswinkels der Kristallisationsstrecke 5 auch unabhängig von der Stellung des Zuleitungsrohres 13 vorgenommen werden.

Bei der integralen Ausführungsform, wie sie in Figur 1 gezeigt wird, mit Granuliereinrichtung 7 und Kristallisationsstreckenteil 35 in einem kompakten Zusammenbau sind das Zuleitungsrohr 13, die Antriebswalze 16 und die Schneidwalze 19 mit dem Schneidkantenträger 27 an einem Rahmengestell angebracht, wobei das gesamte Rahmengestell 28 in Pfeilrichtung B verfahren werden kann, während ein zweites Rahmengestell 29, an dem die Zuleitung 23 und die Andruckwalze 17 angebracht sind, in Pfeilrichtung C verfahren werden kann. Durch diese Zweiteilung des Gestells wird das Anfahren der Vorrichtung erleichtert, indem die Rahmen 28 und 29 erst zusammengefahren werden, wenn die Bildung von Kunststoffsträngen am Düsenaustritt 15 stabilisiert ist. Andererseits kann in der Anfahrphase das Zuleitungsrohr 13 in Richtung D gegenüber dem Rahmen 28 verfahren werden, um das Zuleitungsrohr 13 auf den Düsenkopf 6 auszurichten.

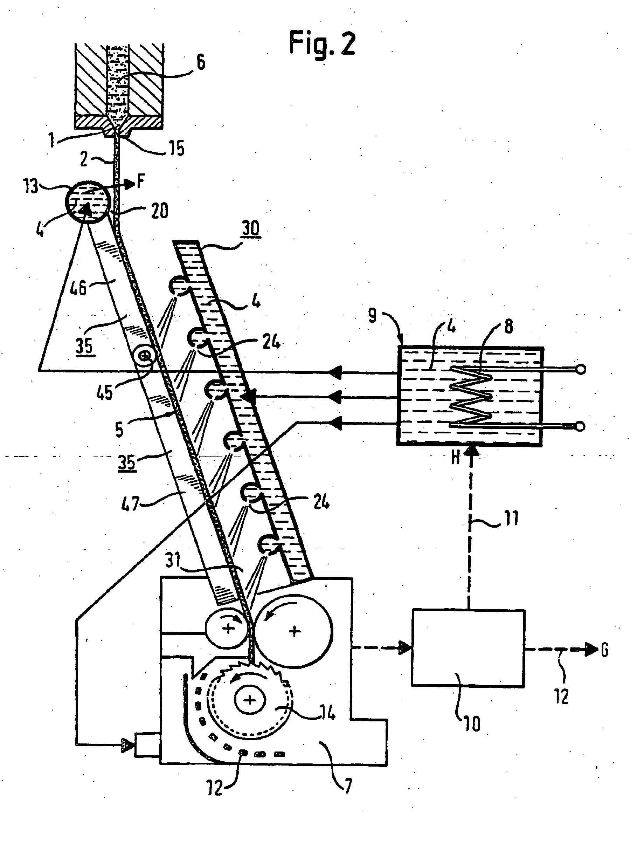

Figur 2 zeigt eine Prinzipskizze einer Vorrichtung zur Durchführung des Verfahrens einschließlich eines Kreislaufes für ein temperiertes flüssiges Medium gemäß einer weiteren Ausführungsform der vorliegenden Erfindung. Diese Ausführungsform der Figur 2 unterscheidet sich von der Ausführungsform der Figur 1 dadurch, daß die Oberseite der Granulatstränge 2 durch eine flächige Sprüheinrichtung 30 mit einer Vielzahl von Sprühdüsen 24 temperiert wird. Darüber hinaus ist die Granuliereinrichtung 7 bei dieser Ausführungsform nicht verschiebbar, sondern mit einem unteren Kristallisationsstreckenteil 47 fest verbunden. Ein oberer Kristallisationsstreckenteil 46 ist mit dem Zuleitungsrohr 13 um das Gelenk 45 in Richtung F schwenkbar, um das Anfahren der Anlage zu erleichtern.

Nach Erreichen eines stabilen Zustands am Düsenaustritt können durch eine nicht gezeigt automatisierte Strangtrennung die Kunststoffstränge 2 abgetrennt werden und das obere Kristallisationsstreckenteil 46 kann eingeschwenkt werden und mit Hilfe der Kristallisationsstrecke 5 kann eine Teilkristallisierung der Stränge vor dem Granulieren erreicht werden. Dazu werden die Unterseiten der Kristallisationsstränge 2 mit temperiertem flüssigen Medium 4 aus der Zuleitung 13 über den Längsschlitz 20 oder entsprechende Bohrungen 40 temperiert und die Oberseite der Stränge durch die flächige Sprüheinrichtung 30 mit temperiertem flüssigen Medium 4 versorgt.

Die teilkristallisierten Stränge werden über die Zuführrinne 31 der Granuliereinrichtung 7 zugeführt, wobei ein Granulieren unter einem flüssigen Medium erfolgt. Das Gemisch aus flüssigem Medium 4 und Granulat 12 wird einem Abscheider 12 zugeführt, der vom flüssigen Medium getrenntes Granulat 12 der Weiterverarbeitung in Pfeilrichtung G zuführt und das flüssige Medium einer Temperaturregelvorrichtung 9 zuführt. In dieser Temperaturregelvorrichtung wird mittels Heiz- und/oder Kühleinrichtungen 8 das flüssige Medium temperiert und der flächigen Sprüheinrichtung 30, dem Zuleitungsrohr 13 und der Granuliereinrichtung zugeführt. Das Kühlmittel ist bei dieser Ausführungsform, die PA6-Kunststoffstränge verarbeiten soll, ein Heißwasser, das auf 80 °C temperiert ist.

Figur 3A und Figur 3B zeigen Querschnittsansichten in Längsrichtung (Figur 3A) und senkrecht dazu (Figur 3B) eines Zuleitungsrohres 13 zur Kristallisationsstrecke, das innen ein temperiertes Kühlmedium 4 leitet und außen Kunststoffstränge in Umfangsringen 33 führt. Dazu ist das Zuleitungsrohr 13 mit einer gut wärmeleitenden Mantelschicht 32 beispielsweise aus einer Metallegierung beschichtet, in die Umfangsrinnen 22 eingearbeitet sind. Das Zuleitungsrohr 13 weist in dieser Ausführungsform einen Längsschnitt 20 auf, durch den in Pfeilrichtung L temperiertes flüssiges Medium 4 austreten kann, und eine Kristallisationsstrecke 5 auf einem Kristallisationsstreckenteil 35 mit einem temperierten Flüssigkeitsfilm überziehen kann.

Figur 4A und 4B zeigen Querschnittsansichten in Längsrichtung und senkrecht dazu eines Zuleitungsrohres 13 zur Kristallisationsstrecke, das innen ein temperiertes flüssiges Medium 4 leitet und außen Kunststoffstränge in Umfangsnuten 21 führt. Die Umfangsnuten 21 unterscheiden sich von den Umfangsrinnen 22 der Figur 3A dadurch, daß sie sägezahnförmig in eine Mantelschicht 32 eingearbeitet sind. Ferner sind an jeder Strangposition Bohrungen 40 zum Austritt von flüssigem Medium 4 in Pfeilrichtung M aus dem Zuleitungsrohr 13 vorgesehen, so daß die Kunststoffstränge 2 auf ihrer Unterseite durch das Medium 4 temperiert werden können.

## Patentansprüche

1. Verfahren zur Zuleitung und Behandlung von schmelzflüssig aus Düsen (1) austretenden Kunststoffsträngen (2) mit einer Kühlstrecke für ein Granulieren der Kunststoffstränge (2)
**dadurch gekennzeichnet, daß**
die Kunststoffstränge (2) unmittelbar nach dem Austritt aus den Düsen (1) in einem temperierten flüssigen Medium (4) auf einer Kristallisationsstrecke (5) teilkristallisiert werden, wobei das flüssige Medium (4) auf einer Temperatur über der Glasumwandlungstemperatur der Kunststoffstränge (2) bis zum anschließenden Granulieren gehalten wird.

2. Verfahren nach Anspruch 1, **dadurch gekennzeichnet, daß** die Temperatur des flüssigen Mediums (4) derart geregelt wird, daß eine konstante Temperatur oberhalb der Glasurnwandlungsternperatur im flüssigen Medium (4) aufrecht erhalten wird.

3. Verfahren nach Anspruch 1 oder 2, **dadurch gekennzeichnet, daß** die Temperatur des flüssigen Mediums (4) derart geregelt wird, daß die Mediumtemperatur unterhalb von 150 % der Glasumwandlungstemperatur in °C und oberhalb von 100 % der Glasumwandlungstemperatur in °C liegt.

4. Verfahren nach einem der vorhergehenden Ansprüche, **dadurch gekennzeichnet, daß** als flüssiges Medium (4) Heißwasser eingesetzt wird.

5. Verfahren nach einem der vorhergehenden Ansprüche, **dadurch gekennzeichnet, daß** die Kunststoffstränge (2) eine Glasumwandlungstemperatur unter 100 °C aufweisen.

6. Verfahren nach einem der vorhergehenden Ansprüche, **dadurch gekennzeichnet, daß** die Kunststoffschmelze (6) Polyamide enthält.

7. Verfahren nach einem der vorhergehenden Ansprüche, **dadurch gekennzeichnet, daß** die Kunststoffschmelze (6) Polyolefine enthält.

8. Verfahren nach einem der vorhergehenden Ansprüche, **dadurch gekennzeichnet, daß** die Kunststoffstränge (2) beim Durchlaufen einer im wesentlichen vertikalen Kristallisationsstrecke (5) temperiert werden.

9. Verfahren nach einem der vorhergehenden Ansprüche, **dadurch gekennzeichnet, daß** die Führung der Kunststoffstränge (2) in der Kristallisations-strecke (5) durch freien Fall erfolgt.

10. Verfahren nach einem der vorhegehenden Ansprüche, **dadurch gekennzeichnet, daß** die Kunststoffstränge (2) zur Weiterbehandlung einer Granuliereinrichtung (7) zugeführt werden.

11. Vorrichtung zur Zuleitung und Behandlung von Kunststoffsträngen mit Düsen (1), aus denen die Kunststoffstänge schmelzflüssig austreten, einem Kühlstreckenteil, der unmittelbar nach den Düsen (1) angeordnet ist, und einer Granuliervorrichtung (7), die dem Kühlstreckenteil nachgeordnet ist,
**dadurch gekennzeichnet, daß**
der Kühlstreckenteil als Kristallisationsstreckenteil (35) ausgebildet ist und zur Temperierung der Kristallisationsstrecke (5) des Kristallisationsstreckenteils (35) Heiz- und/oder Kühleinrichtungen (8) sowie Temperaturregelvorrichtungen (9) vorgesehen sind, mit denen die Temperatur eines temperierten flüssigen Mediums (4) auf eine Temperatur oberhalb der Glasumwandlungstemperatur der Kunststoffstränge (2) regelbar ist, und daß ein Zuleitungsrohr (13) zur Temperierung der Unterseite der Kunststoffstränge (2) in seinem Innenraum das temperierte flüssige Medium (4) leitet und auf seinem Außenmantel die Kunststoffstränge (2) führt.

12. Vorrichtung nach Anspruch 11, **dadurch gekennzeichnet, daß** das Kristallisationsstreckenteil (35) im wesentlichen senkrecht angeordnet ist.

13. Vorrichtung nach Anspruch 11 oder 12, **dadurch gekennzeichnet, daß** die Heiz- und Kühleinrichtungen (8) Durchlaufthermostate sind, die das temperierte flüssige Medium (4) auf eine konstante Vorlauftemperatur regeln.

14. Vorrichtung nach einem der Ansprüche 11 bis 13, **dadurch gekennzeichnet, daß** die Granuliereinrichtung (7) unmittelbar nach dem Kristallisationsstreckenteil (35) der Kristallisationsstrecke (5) stromabwärts in Richtung des Materialflusses angeordnet ist.

15. Vorrichtung nach einem des Ansprüche 11 bis 14, **dadurch gekennzeichnet, daß** das Zuleitungsrohr (13) einen Längsschlitz (20) zur Versorgung des Kristallisationsstreckenteils mit temperiertem Medium aufweist.

16. Vorrichtung nach einem des Ansprüche 11 bis 15, **dadurch gekennzeichnet, daß** das Zuleitungsrohr (13) an jeder Position zur Führung eines Kunststoffstranges (2) eine Bohrung zur Temperierung der Unterseite des Kunststoffstranges mittels eines temperierten Mediums (4) aufweist.

17. Vorrichtung nach einem der vorhergehenden Ansprüche, **dadurch gekennzeichnet, daß** ein Kristallisationsstreckenteil (35) zwischen einer Ruheposition und einer Arbeitsposition schwenkbar ist, wobei die Ruheposition ein Austreten der Kunststoffschmelze (6) aus den Düsen (1) in vertikaler Richtung freigibt und die Arbeitsposition die Kunststoffstränge in teilkristallisierter Form der Granuliereinrichtung zuführt.

## Claims

1. Method of feeding and treating plastic strands (2) emerging from dies (1) in the molten state, comprising a cooling section for pelletising the plastic strands (2), **characterised in that**, immediately after emerging from the dies (1), the plastic strands (2) are partially crystallised in a temperature-controlled liquid medium (4) in a crystallisation section (5), the liquid medium (4) being kept at a temperature above the glass transition temperature of the plastic strands (2) until the subsequent pelletisation stage.

2. Method according to claim 1, **characterised in that** the temperature of the liquid medium (4) is controlled in such a manner that a constant temperature above the glass transition temperature is maintained in the liquid medium (4).

3. Method according to claim 1 or claim 2, **characterised in that** the temperature of the liquid medium (4) is controlled in such a manner that the medium temperature is below 150 % of the glass transition temperature in °C and above 100 % of the glass transition temperature in °C.

4. Method according to one of the preceding claims, **characterised in that** hot water is used as the liquid medium (4).

5. Method according to one of the preceding claims, **characterised in that** the plastic strands (2) have a glass transition temperature below 100°C.

6. Method according to one of the preceding claims, **characterised in that** the polymer melt (6) contains polyamides.

7. Method according to one of the preceding claims, **characterised in that** the polymer melt (6) contains polyolefins.

8. Method according to one of the preceding claims, **characterised in that** the temperature of the plastic strands (2) is controlled as they pass through a substantially vertical crystallisation section (5).

9. Method according to one of the preceding claims, **characterised in that** the plastic strands (2) are guided in the crystallisation section (5) by free fall.

10. Method according to one of the preceding claims, **characterised in that** the plastic strands (2) are fed to a pelletiser (7) for further treatment.

11. Device for feeding and treating plastic strands, comprising dies (1) from which the plastic strands emerge in the molten state, a cooling section part arranged immediately after the dies (1) and a pelletiser (7) arranged after the cooling section part, **characterised in that** the cooling section part is designed as a crystallisation section part (35) and that heating and/or cooling devices (8) as well as temperature-control devices (9) by means of which the temperature of a temperature-controlled liquid medium (4) can be regulated at a temperature above the glass transition temperature of the plastic strands (2) are provided to control the temperature of the crystallisation section (5) of the crystallisation section part (35), and that a feed pipe (13) conducts the temperature-controlled liquid medium (4) in its interior and guides the plastic strands (2) on its outer surface in order to control the temperature of the underside of the plastic strands (2).

12. Device according to claim 11, **characterised in that** the crystallisation section part (35) is arranged substantially vertically.

13. Device according to claim 11 or claim 12, **characterised in that** the heating and cooling devices (8) are flow-through thermostats which regulate the temperature-controlled liquid medium (4) at a constant initial temperature.

14. Device according to one of claims 11 to 13, **characterised in that** the pelletiser (7) is arranged immediately after the crystallisation section part (35) downstream of the crystallisation section (5) in the direction of the material flow.

15. Device according to one of claims 11 to 14, **characterised in that** the feed pipe (13) has a longitudinal slot (20) for supplying the crystallisation section part with temperature-controlled medium.

16. Device according to one of claims 11 to 15, **characterised in that** the feed pipe (13) is provided at each position for guiding a plastic strand (2) with a bore for controlling the temperature of the underside of the plastic strand by means of a temperature-controlled medium (4).

17. Device according to one of the preceding claims, **characterised in that** a crystallisation section part (35) can pivot between a rest position and a working position, the rest position allowing the polymer melt (6) to emerge from the dies (1) in the vertical direction and the working position feeding the plastic strands to the pelletiser in partially crystallised form.

## Revendications

1. Procédé pour l'amenée et le traitement de cordons de matière plastique (2) sortant en fusion de buses (1), avec un parcours de refroidissement pour une granulation des cordons de matière plastique (2),
**caractérisé en ce que**
immédiatement après la sortie des buses (1), les cordons de matière plastique (2) sont partiellement cristallisés dans un milieu liquide tempéré (4) sur un parcours de cristallisation (5), le milieu liquide (4) étant maintenu à une température supérieure à la température de transition vitreuse des cordons de matière plastique (2) jusqu'à la granulation ultérieure.

2. Procédé selon la revendication 1, **caractérisé en ce que** la température du milieu liquide (4) est régulée de façon qu'une température constante supérieure à la température de transition vitreuse soit maintenue dans le milieu liquide (4).

3. Procédé selon la revendication 1 ou 2, **caractérisé en ce que** la température du milieu liquide (4) est régulée de façon que la température du milieu soit inférieure à 150 % de la température de transition vitreuse en °C et supérieure à 100 % de la température de transition vitreuse en °C.

4. Procédé selon l'une des revendications précédentes, **caractérisé en ce que** le milieu liquide (4) mis en oeuvre est de l'eau chaude.

5. Procédé selon l'une des revendications précédentes, **caractérisé en ce que** les cordons de matière plastique (2) possèdent une température de transition vitreuse inférieure à 100 °C.

6. Procédé selon l'une des revendications précédentes, **caractérisé en ce que** la matière plastique en fusion (6) contient des polyamides.

7. Procédé selon l'une des revendications précédentes, **caractérisé en ce que** la matière plastique en fusion (6) contient des polyoléfines.

8. Procédé selon l'une des revendications précédentes, **caractérisé en ce que** les cordons de matière plastique (2) sont tempérés en traversant un parcours de cristallisation sensiblement vertical (5).

9. Procédé selon l'une des revendications précédentes, **caractérisé en ce que** les cordons de matière plastique (2) sont guidés en chute libre dans le parcours de cristallisation (5).

10. Procédé selon l'une des revendications précédentes, **caractérisé en ce que** les cordons de matière plastique (2) sont amenés à un dispositif de granulation (7) en vue d'un traitement ultérieur.

11. Dispositif pour l'amenée et le traitement de cordons de matière plastique, avec des buses (1), desquelles les cordons de matière plastique sortent en fusion, avec une partie de parcours de refroidissement, qui est disposée juste après les buses (1), et avec un dispositif de granulation (7), qui est disposé en aval de la partie de parcours de refroidissement,
**caractérisé en ce que**
la partie de parcours de refroidissement est conformée en partie de parcours de cristallisation (35) et, pour la mise à température du parcours de cristallisation (5) de la partie de parcours de cristallisation (35), il est prévu des dispositifs de chauffage et/ou de refroidissement (8) ainsi que des dispositifs de régulation de température (9) qui permettent de réguler la température d'un milieu liquide tempéré (4) à une température supérieure à la température de transition vitreuse des cordons de matière plastique (2), et
**en ce qu'**un tuyau d'amenée (13) pour la mise à température du dessous des cordons de matière plastique (2) conduit, dans son espace intérieur, le milieu liquide tempéré (4) et guide, sur sa surface extérieure, les cordons de matière plastique (2).

12. Dispositif selon la revendication 11, **caractérisé en ce que** la partie de parcours de cristallisation (35) est disposée sensiblement verticalement.

13. Dispositif selon la revendication 11 ou 12, **caractérisé en ce que** les dispositifs de chauffage et de refroidissement (8) sont des thermostats continus qui régulent le milieu liquide tempéré (4) à une température d'entrée constante.

14. Dispositif selon l'une des revendications 11 à 13, **caractérisé en ce que** le dispositif de granulation (7) est disposé juste après la partie de parcours de cristallisation (35), en aval du parcours de cristallisation (5) par rapport au flux de matière.

15. Dispositif selon l'une des revendications 11 à 14, **caractérisé en ce que** le tuyau d'amenée (13) est pourvu d'une fente longitudinale (20) pour alimenter la partie de parcours de cristallisation en milieu tempéré.

16. Dispositif selon l'une des revendications 11 à 15, **caractérisé en ce que** le tuyau d'amenée (13) est pourvu, à chaque emplacement de guidage d'un cordon de matière plastique (2), d'un trou pour la mise à température du dessous du cordon de matière plastique au moyen d'un milieu tempéré (4).

17. Dispositif selon l'une des revendications précédentes, **caractérisé en ce qu'**une partie de parcours de cristallisation (35) peut pivoter entre une position de repos et une position de travail, la position de repos permettant à la matière plastique en fusion (6) de sortir des buses (1) dans la direction verticale, et la position de travail amenant les cordons de matière plastique au dispositif de granulation sous forme partiellement cristallisée.
